# EUROPÄISCHE PATENTSCHRIFT

(11) **EP 0 647 008 B1**
(45) Veröffentlichungstag und Bekanntmachung des Hinweises auf die Patenterteilung: **03.09.1997**
(21) Anmeldenummer: 94810545.7
(22) Anmeldetag: 21.09.1994
(51) Int. Cl.: H02K 15/09

(54) **Verfahren zum Wickeln von Kollektorankern für elektrische Motoren**
Method for winding electric motor armatures
Méthode pour bobiner des rotors de moteurs électriques

(30) Priorität: 05.10.1993 CH 2996/93
(43) Veröffentlichungstag der Anmeldung: 05.04.1995
(73) Patentinhaber: Zihlmann Wickeltechnik AG, 5436 Würenlos (CH)
(72) Erfinder: Zihlmann, Sigfried, CH-8116 Würenlos (CH)
(74) Vertreter: Patentanwälte Breiter + Wiedmer AG

(56) Entgegenhaltungen:
- EP-A- 0 536 981
- US-A- 5 029 619

## Beschreibung

Die Erfindung betrifft ein Verfahren zum Wickeln von Kollektorankern für elektrische Motoren, bei dem jeweils zwei Spulen desselben Ankers gleichzeitig gewickelt werden. Die Erfindung umfasst zudem eine zur Durchführung des Verfahrens geeignete Wickelmaschine.

Ankerwickelmaschinen zum Wickeln von Kollektorankern für elektrische Motoren sind heute üblicherweise mit einem Drahtzugmess- und regelsystem ausgerüstet.

Die EP-A-0 536 981 beschreibt ein Verfahren zum Wickeln von Kollektorankern für elektrische Motoren, bei dem die verarbeitete Länge des aufgewickelten Drahtes der Spule kontinuierlich gemessen und die Differenz zwischen Ist- und Sollwert der Drahtlängen als Signal erfasst wird. Beim Überschreiten einer vorgegebenen Drahtlängendifferenz wird ein Fehler festgestellt, um die weitere Drahtzufuhr zu stoppen. Das bekannte Verfahren befaßt sich jedoch nicht mit der Symmetrie zwischen zwei gleichzeitig gewickelten Spulen.

Zum Stand der Technik gehören auch Ankerwickelmaschinen mit paarweise angeordneten Drahtzufuhrvorrichtungen zum jeweils gleichzeitigen Wickeln von zwei Spulen desselben Ankers. Gerade diesen letztgenannten Wickelmaschinen haftet der Nachteil an, dass asymmetrische Wicklungen, die zu einer Unwucht des gewickelten Ankers führen, oft nicht sofort erkannt werden. Derartige Asymmetrien können aus verschiedenen Gründen auftreten, so beispielsweise bei Unterschieden des Drahtdurchmessers und der Drahtqualität sowie bei Formfehlern der Wickelwerkzeuge.

Angesichts dieser Gegebenheiten hat sich der Erfinder die Aufgabe gestellt, ein Verfahren der eingangs erwähnten Art zu schaffen, mit welchem Unterschiede in der Symmetrie der beiden gleichzeitig gewickelten Spulen sofort erkannt und korrigiert werden können.

Zur erfindungsgemässen Lösung der Aufgabe führt, dass die verarbeitete Länge des aufgewickelten Drahtes jeder Spule kontinuierlich gemessen und die Differenz zwischen den verarbeiteten Drahtlängen als Signal erfasst wird.

Das Signal kann kontinuierlich aufgezeichnet werden und/oder beim Ueberschreiten einer vorgegebenen Drahtlängendifferenz eine optische, akustische und/oder steuernde Meldung auslösen.

Bevorzugt wird das Signal in einen Regelkreis für die Drahtzuführung zurückgeführt. Wird die vorgegebene Drahtlängendifferenz überschritten, so führt dies zu einem Stop der weiteren Drahtzufuhr. Innerhalb der vorgegebenen Drahtlängendifferenz kann ein weiterer Toleranzwert vorgegeben und dessen Ueberschreiten über eine automatische Drahtzugregelung ausgeglichen werden.

Eine zur Durchführung des erfindungsgemässen Verfahrens bevorzugte Wickelmaschine mit zwei Drahtzufuhrvorrichtungen zum gleichzeitigen Wickeln von jeweils zwei Spulen desselben Ankers zeichnet sich dadurch aus, dass jede der Drahtzufuhrvorrichtungen eine Einrichtung zur Messung der Länge des aufgewickelten Drahtes sowie eine Steuereinheit zur Bereitstellung eines elektrischen Signals beim Ueberschreiten einer vorgegebenen Drahtlängendifferenz aufweist.

Bei einer bevorzugten Ausführungsform der erfindungsgemässen Wickelmaschine ist die Einrichtung zur Drahtlängenmessung einem Bremsrad für den zugeführten Draht zugeordnet. Insbesondere kann am Bremsrad eine mit einer Gabellichtschranke in Wirkverbindung stehende Impulsscheibe festgelegt sein.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt schematisch in
- Fig. 1: die Frontsicht auf eine Montageplatte mit einer Drahtzufuhrvorrichtung;
- Fig. 2: eine teilweise geschnittene Draufsicht auf die Drahtzufuhrvorrichtung von Fig. 1 gemäss deren Linie I-I;
- Fig. 3: einen Schnitt durch die Drahtzufuhrvorrichtung von Fig. 1 gemäss deren Linie II-II.

Eine Drahtzufuhrvorrichtung 10 für eine aus Gründen der besseren Uebersicht in der Zeichnung nicht dargestellte Wickelmaschine zum Wickeln von Kollektorankern für elektrische Motoren besteht im wesentlichen aus einer Montageplatte 12, auf welcher die einzelnen Elemente, die der Führung eines Drahtes 11 von einer Vorratsrolle zum Wickelbereich dienen, montiert sind.

Der von der nicht gezeigten Vorratsrolle ankommende Draht wird an einer Vorbremse 14 vorbeigeführt und umschlingt anschliessend eine Hauptbremse 16, eine Kraftmessrolle 18 sowie einen zwischen zwei Umlenkrollen 20,21 angeordneten, auf einem Tänzerarm 24 beweglich angeordneten Tänzer 22.

Die Hauptbremse 16 umfasst ein Bremsrad 26, über welches der Draht 11 läuft, sowie eine auf dem Bremsrad 26 festgelegte Impulsscheibe 28. Diese wird von einer auf der Montageplatte 12 befestigten Gabellichtschranke 30 umgriffen.

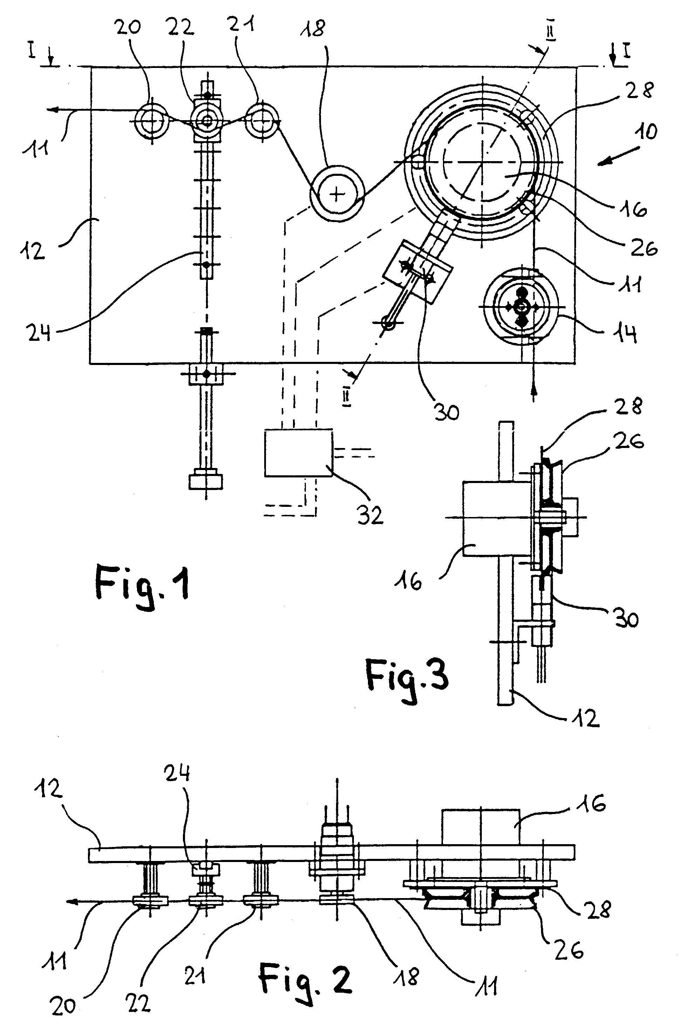

Die Funktionsweise der in den Fig. 1 bis 3 dargestellten Drahtzufuhrvorrichtung 10 kann wie folgt beschrieben werden:

Der von der Vorratsrolle ankommende Draht 11, der durch den eigentlichen Wickelvorgang gezogen wird, wird durch die Vorbremse 14 leicht gebremst, so dass er am Bremsrad 26 der Hauptbremse 16 straff anliegt. Nach Vorgabe eines dem Drahtdurchmesser entsprechenden Sollwerts wird der Drahtzug über die Hauptbremse 16 geregelt. Hierzu dient die nach der Hauptbremse 16 angeordnete Kraftmessrolle 18, deren Steuersignale von einer Steuereinheit 32 gemessen werden, welche anschliessend den Antrieb der Hauptbremse 16 regelt. Der zwischen den beiden Umlenkrollen 20,21 angeordnete Tänzer 22 dient in bekannter Weise der Straffung des Drahtes 11 in den Wickelwerkzeugen während den beim Wickeln auftretenden Entlastungsbewegungen.

Ueber die mit der Impulsscheibe 28 zusammenwirkende Gabellichtschranke 30 wird die Drehbewegung des Bremsrades 26 und damit die Länge des über dieses abgewickelten Drahtes 11 gemessen.

Einer Wickelmaschine zum Wickeln von Kollektorankern für elektrische Motoren werden jeweils zwei Drahtzufuhrvorrichtungen 10 zum gleichzeitigen Wickeln von jeweils zwei Spulen desselben Ankers zugeordnet. Die über die entsprechenden Impulsscheiben 28 und Gabellichtschranken 30 bei beiden Drahtzufuhrvorrichtungen 10 gemessenen Längen des während des Wickelvorgangs abgewickelten Drahtes 11 werden als Steuersignale der Steuereinheit 32 zugeführt, in welcher die Differenz der auf beiden Drahtzufuhrvorrichtungen 10 verarbeiteten Drahtlängen kontinuierlich gemessen wird. Der Messwert der Drahtlängendifferenz wird mit einem vorgegebenen Toleranzwert verglichen und das Ueberschreiten der vorgegebenen maximalen Drahtlängendifferenz wird signalisiert.

Durch eine Rückführung des Signals in den Regelkreis der Drahtzuführung wird die weitere Drahtzufuhr beim Ueberschreiten der vorgegebenen Drahtlängendifferenz gestoppt. Bei nur geringer Drahtlängendifferenz innerhalb des vorgegebenen Maximalwerts kann ein Ausgleich über die automatische Drahtzugregelung erfolgen.

Eine Einhaltung der Toleranzgrenze für die Drahtlängendifferenz garantiert somit die Symmetrie der beiden gleichzeitig durchgeführten Wicklungen und minimiert dadurch die Unwucht des Ankers. Durch die Messung der Drahtlängendifferenz können Unterschiede des Drahtdurchmessers und der Drahtqualität sowie Formfehler der Wickelwerkzeuge sofort erkannt und entsprechend korrigiert werden.

## Patentansprüche

1. Verfahren zum Wickeln von Kollektorankern für elektrische Motoren, bei dem jeweils zwei Spulen desselben Ankers gleichzeitig gewickelt werden,
dadurch gekennzeichnet,
dass die verarbeitete Länge des aufgewickelten Drahtes jeder Spule kontinuierlich gemessen und die Differenz zwischen den verarbeiteten Drahtlängen als Signal erfasst wird.

2. Verfahren nach Anspruch 1, dadurch gekennzeichnet, dass das Signal kontinuierlich aufgezeichnet wird.

3. Verfahren nach Anspruch 1 oder 2, dadurch gekennzeichnet, dass das Signal beim Ueberschreiten einer vorgegebenen Drahtlängendifferenz eine optische, akustische und/oder steuernde Meldung auslöst.

4. Verfahren nach Anspruch 3, dadurch gekennzeichnet, dass das Signal in einen Regelkreis für die Drahtzuführung zurückgeführt wird.

5. Verfahren nach Anspruch 4, dadurch gekennzeichnet, dass beim Ueberschreiten der vorgegebenen Drahtlängendifferenz die weitere Drahtzufuhr gestoppt wird.

6. Verfahren nach Anspruch 3, dadurch gekennzeichnet, dass beim Ueberschreiten eines Toleranzwertes innerhalb der vorgegebenen Drahtlängendifferenz dieser über eine automatische Drahtzugregelung ausgeglichen wird.

7. Wickelmaschine zum Wickeln von Kollektorankern für elektrische Motoren, mit zwei Drahtzufuhrvorrichtungen (10) zum gleichzeitigen Wickeln von jeweils zwei Spulen desselben Ankers, dadurch gekennzeichnet, dass jede der Drahtzufuhrvorrichtungen (10) eine Einrichtung (28,30) zur Messung der Länge des aufgewickelten Drahtes (11) sowie eine Steuereinheit (32) zur Bereitstellung eines elektrischen Signals beim Ueberschreiten einer vorgegebenen Drahtlängendifferenz aufweist.

8. Wickelmaschine nach Anspruch 7, dadurch gekennzeichnet, dass die Einrichtung (28,30) zur Drahtlängenmessung einem Bremsrad (26) für den zugeführten Draht zugeordnet ist.

9. Wickelmaschine nach Anspruch 8, dadurch gekennzeichnet, dass am Bremsrad (26) eine mit einer Gabellichtschranke (30) in Wirkverbindung stehende Impulsscheibe (28) festgelegt ist.

## Claims

1. Process for winding commutator rotors for electric motors in which two coils of the same rotor are wound simultaneously, characterized in that the processed length of the wound wire of each coil is measured continuously and the difference between the processed wire lengths detected as a signal.

2. Process according to claim 1, characterized in that the signal is recorded continuously.

3. Process according to claim 1 or 2, characterized in that when a prespecified wire length difference is exceeded, the signal triggers an optical,
acoustic and/or control indicator.

4. Process according to claim 3, characterized in that the signal is supplied to a control circuit for the wire supply.

5. Process according to claim 4, characterized in that the further supply of wire is stopped when the preset wire length difference is exceeded.

6. Process according to claim 3, characterized in that when a tolerance range within the preset wire length difference is exceeded, this is compensated via an automatic wire tension control system.

7. Winding machine for winding commutator rotors for electric motors with two wire supply devices (10) for simultaneous winding of two coils of the same rotor in each case, characterized in that each of the wire supply devices (10) has an apparatus (28, 30) for measuring the length of the wound wire (11) and a control unit (32) for providing an electric signal when a specified wire length difference is exceeded.

8. Winding machine according to claim 7, characterized in that the apparatus (28, 30) for wire length measurement is associated with a braking wheel (26) for the wire supplied.

9. Winding machine according to claim 8, characterized in that on the braking wheel (26) is established a pulse disc (28) actively connected with a forked light barrier (30).

## Revendications

1. Procédé de bobinage d'induits pour moteurs électriques, dans lequel les deux bobines du même induit sont toutes deux bobinées simultanément, caractérisé en ce que la longueur traitée du fil bobiné de chaque bobine est mesurée en continu et la différence entre les longueurs de fil traitées est détectée en tant que signal.

2. Procédé selon la revendication 1, caractérisé en ce que le signal est enregistré en continu.

3. Procédé selon la revendication 1 ou 2, caractérisé en ce que le signal déclenche un avertissement optique, acoustique et/ou de commande lorsqu'une différence prédéterminée entre les longueurs de fil est dépassée.

4. Procédé selon la revendication 3, caractérisé en ce que le signal est envoyé pour rétroaction dans une boucle de régulation de l'amenée de fil.

5. Procédé selon la revendication 4, caractérisé en ce que la poursuite de l'amenée de fil est arrêtée lorsque la différence prédéterminée entre les longueurs est dépassée.

6. Procédé selon la revendication 3, caractérisé en ce que, en cas de dépassement d'une valeur de tolérance incluse à l'intérieur de la différence prédéterminée entre les longueurs de fil, cette différence est compensée au moyen d'une régulation automatique de traction de fil.

7. Machine à bobiner destinée à bobiner des induits pour moteurs électriques, pourvue de deux dispositifs (10) d'amenée de fil pour bobiner simultanément les deux bobines appartenant toutes deux au même induit, caractérisée en ce que chacun des dispositifs (10) d'amenée de fil comporte un appareillage (28, 30) de mesure de la longueur du fil bobiné (11) ainsi qu'une unité de commande (32) pour préparer un signal électrique lorsqu'une différence prédéterminée de longueur de fil est dépassée.

8. Machine de bobinage selon la revendication 7, caractérisée en ce que l'appareillage (28, 30) de mesure de longueur de fil est associé à une roue de freinage (26) du fil amené.

9. Machine de bobinage selon la revendication 8, caractérisée en ce qu'un disque à impulsions (28) relié fonctionnellement à une barrière lumineuse (30) à fourche est fixé sur la roue de freinage (26).
